# EUROPÄISCHE PATENTSCHRIFT

(11) **EP 1 135 286 B1**
(45) Veröffentlichungstag und Bekanntmachung des Hinweises auf die Patenterteilung: **18.12.2002**
(21) Anmeldenummer: 00956505.2
(22) Anmeldetag: 31.08.2000
(51) Int. Cl.: B60T 8/94, B60T 8/40, B60T 17/18, B60T 13/68, B60T 17/10

(54) **BREMSSYSTEM MIT ELEKTRO-HYDRAULISCHER BREMSKRAFTVERSTÄRKUNG FÜR EIN FAHRZEUG**
BRAKING SYSTEM COMPRISING AN ELECTRO-HYDRAULIC BRAKE BOOSTER FOR A VEHICLE
SYSTEME DE FREINAGE POUR VEHICULE AVEC AMPLIFICATION ELECTRO-HYDRAULIQUE DE LA PUISSANCE DE FREINAGE

(30) Priorität: 02.10.1999 DE 19947750
(43) Veröffentlichungstag der Anmeldung: 26.09.2001
(73) Patentinhaber: DaimlerChrysler AG, 70567 Stuttgart (DE)
(72) Erfinder: FRENTZ, Georg, 72622 Nürtingen (DE); LEBER, Matthias, 70599 Stuttgart (DE); RIEDEL, Hans-Georg, 75177 Pforzheim (DE); WOLL, Peter, 76646 Bruchsal (DE)
(86) Internationale Anmeldenummer: EP0008527
(87) Internationale Veröffentlichungsnummer: WO01025068

(56) Entgegenhaltungen:
- EP-A- 0 761 519
- EP-A- 0 761 520
- DE-A- 2 231 286
- DE-A- 3 526 556
- DE-A- 19 632 957

## Beschreibung

Die Erfindung betrifft ein Bremssystem mit elektro-hydraulischer Bremskraftverstärkung für ein Fahrzeug nach dem Oberbegriff des Anspruches 1.

Aus der DE 35 26 556 A1 geht ein derartiges Bremssystem hervor, bei dem ein Hydraulik-Hauptzylinder vom Bremspedal beaufschlagt wird, woraufhin Hydraulikfluid in einen Pedalwegsimulator entweicht, dessen Druckänderung erfasst und der Steuerung einer elektrischen Pumpe zugrunde gelegt wird, mittels der ein Bremskreis mit Bremsdruck versorgt wird. Der Bremsdruck wirkt auf eine hydraulisch betätigbare Radbremseinrichtung, die ein Rad des Fahrzeugs abbremst.

Um sicher zu stellen, dass bei einem Ausfall der Stromversorgung ein hinreichender Bremsdruck zur Verfügung steht, kann der Hydraulik-Hauptzylinder, der vom Bremspedal betätigt wird, über schaltbare Ventile mit dem Bremskreis verbunden werden, so dass im Notfall die vom Fahrer ausgeübte Pedalkraft unmittelbar auf das Hydraulikfluid im Hauptzylinder und über die auf Durchfluss geschalteten Ventile in den Bremskreis geleitet wird und dementsprechend die Radbremseinrichtung mit dem vom Fahrer manuell erzeugten Bremsdruck beaufschlagt wird.

Insbesondere bei einem Einsatz in großen und schweren Fahrzeugen muss die Bremseinrichtung ausreichend groß dimensioniert sein, damit eine hinreichend große Bremskraft erzeugt werden kann, um das Fahrzeug in der vorgeschriebenen Weise verzögern zu können. Bei einer Auslegung der Systemkomponenten des Bremssystems auf das Gewicht des Fahrzeuges müssen hohe Anforderungen im Hinblick auf mechanische und thermische Belastungen erfüllt werden, wodurch insbesondere bei großen Fahrzeugen die Herstellungs- und Betriebskosten erhöht sind.

Der Erfindung liegt das Problem zu Grunde, ein Bremssystem mit elektro-hydraulischer Bremskraftverstärkung zu schaffen, das in einfacher und kostengünstiger Weise auf Fahrzeuge unterschiedlicher Größe und Gewicht anzupassen ist.

Dieses Problem wird erfindungsgemäß mit den Merkmalen des Anspruches 1 gelöst.

Gemäß der Neuerung ist eine zweite Hydraulikeinrichtung im Bremssystem vorgesehen, der eine eigene Motor/Pumpen-Einheit und ein eigener hydraulischer Bremskreis zugeordnet ist, wobei über den zusätzlichen Bremskreis eine zusätzliche Radbremseinrichtung mit Bremsdruck zu versorgen ist. Beide Radbremseinrichtungen wirken gemeinsam auf ein Rad des Fahrzeugs.

Durch die redundante Auslegung des Bremssystems wird die Ausfallsicherheit wesentlich erhöht, da bei einem Ausfall einer Hydraulikeinrichtung die Bremsfunktion von der zweiten Hydraulikeinrichtung übernommen wird. Beide Hydraulikeinrichtungen einschließlich der jeweils zugeordneten Bremskreise und Radbremseinrichtungen können grundsätzlich unabhängig von einander betätigt werden, wodurch sichergestellt ist, dass bei einem Ausfall einer Hydraulikeinrichtung die verbleibende intakte Hydraulikeinrichtung ohne Einschränkungen funktioniert. Durch die Verdoppelung der auf ein Rad Einfluss nehmende Systemkomponenten genügt es, auch bei groß dimensionierten Fahrzeugen Standardbauteile zu verwenden, die für Durchnittsfahrzeuge konzipiert worden sind, wodurch Kosten für Entwicklung, Fertigung, Montage und Instandhaltung deutlich gesenkt werden können.

Der Ausfall eines Bremskreises wird zweckmäßig dem Fahrer angezeigt, damit sofortige Reparaturmaßnahmen eingeleitet werden können, um eine Überlastung der verbleibenden intakten Hydraulikeinrichtung und Radbremseinrichtung vermeiden.

Da beide Radbremseinrichtungen auf das gleiche Rad des Fahrzeugs wirken, besteht auch bei einem Ausfall eines Teils des Bremssystems keine Gefahr einer unerwünschten Rückwirkung auf die Fahrdynamik des Fahrzeuges. Bei einem Ausfall einer Hydraulikeinrichtung kann durch konstruktive und/oder steuerungstechnische Maßnahmen sichergestellt werden, dass im Verlauf der auf das betreffende Rad wirkenden Bremskraft keinen Sprung auftritt, sondern der Verlauf der Bremskraft stetig bleibt. Das Fahrverhalten des Fahrzeugs erfährt auch bei einem Ausfall einer Hydraulikeinrichtung keine Einschränkungen.

In einer vorteilhaften Weiterbildung ist vorgesehen, dass der Bremskreis einer Hydraulikeinrichtung mit dem Bremskreis der anderen Hydraulikeinrichtung über schaltbare Ventile verbunden werden kann. In dieser Anordnung, die als Master-Slave-Anordnung bezeichnet werden kann, werden die beiden Hydraulikeinrichtungen im Fehlerfall in ein bestimmtes Abhängigkeitsverhältnis zueinander gestellt. Der Bremskreis der Slave-Hydraulikeinrichtung kommuniziert bei geschlossenen Ventilen mit dem Bremskreis der Master-Hydraulikeinrichtung. Fällt die Slave-Hydraulikeinrichtung aus, so werden die Ventile dieser Einrichtung geschlossen und es wird der in der Master-Hydraulikeinrichtung erzeugte Bremsdruck auch auf den Bremskreis der Slave-Hydraulikeinrichtung übertragen, so dass die von der Slave-Hydraulikeinrichtung zu versorgende Radbremseinrichtung mit dem gleichen Bremsdruck wie die von der Master-Hydraulikeinrichtung zu versorgende Radbremseinrichtung beaufschlagt wird. Dadurch können auch sicherheitsrelevante Systemkomponenten des Fahrzeugs wie zum Beispiel Anti-Blockier-Systeme in Kraft bleiben.

Im Normalfall - bei funktionierendem Bremssystem - besteht keine Abhängigkeit zwischen den beiden Hydraulikeinrichtungen mit Master-Slave-Hierarchie. Die den jeweiligen Hydraulikeinrichtungen zugeordneten Bremskreise werden unabhängig voneinander von den jeweiligen Motor/Pumpen-Einheiten mit Bremsdruck beaufschlagt.

Um auch bei einem Ausfall beider Motor/Pumpen-Einheiten Bremsdruck zur Verfügung stellen zu können, ist ein vom Bremspedal mechanisch zu beaufschlagender Hydraulikzylinder vorgesehen, der im Notfall über Ventile mit der Master-Hydraulikeinrichtung zu verbinden ist. Fällt die Master-Hydraulikeinrichtung aus oder fallen beide Hydraulikeinrichtungen aus, so wird der vom Bremspedal erzeugte Bremsdruck unmittelbar auf die Radbremseinrichtung der Master-Hydraulikeinrichtung bzw. auf beide Radbremseinrichtungen von Master- und Slave-Hydraulikeinrichtung durchgeleitet.

In einer weiteren vorteilhaften Ausführung sind die beiden Hydraulikeinrichtungen gleichrangig ausgeführt, es besteht im Unterschied zur Master-Slave-Anordnung kein hierarchisches Verhältnis zwischen den Hydraulikeinrichtungen. In dieser Ausführung sind bevorzugt beide Hydraulikeinrichtungen unmittelbar über Ventile mit dem mechanisch vom Bremspedal zu betätigenden Hydraulikzylinder zu verbinden, damit im Notfall bei einem Ausfall der einen Hydraulikeinrichtung und/oder bei einem Ausfall der anderen Hydraulikeinrichtung der vom Bremspedal übertragene Bremsdruck auf die zugeordneten Radbremseinrichtungen durchgeleitet werden kann. Diese Ausführung zeichnet sich durch maximale Unabhängigkeit der beiden Hydraulikeinrichtungen aus. Der Ausfall einer Hydraulikeinrichtung bleibt ohne Rückwirkung auf die Funktion der verbleibenden intakten Hydraulikeinrichtung. Da beide Hydraulikeinrichtungen jeweils zumindest einen Bremskreis aufweisen, der die zugehörigen Radbremseinrichtungen mit Bremsdruck beaufschlagt, welche auf ein gemeinsames Rad des Fahrzeugs wirken, kann dieses Rad ohne Einschränkung der Bremskraft auch bei einem Ausfall einer Hydraulikeinrichtung gebremst werden.

Zur Erhöhung der Sicherheit sind die Ventile in den Bremskreisen im stromlosen Zustand in der Weise geschaltet, dass eine Verbindung mit dem Hydraulikzylinder gegeben ist, so dass bei unbestromten Ventilen der betreffende Bremskreis unmittelbar über den vom Bremspedal zu betätigenden Hydraulikzylinder mit Bremsdruck versorgt wird.

Weitere Vorteile und zweckmäßige Ausführungen sind den weiteren Ansprüchen, der Figurenbeschreibung und den Zeichnungen zu entnehmen. Es zeigen:
- Fig. 1: ein Bremssystem für ein Kraftfahrzeug mit insgesamt sechs unabhängigen Bremskreisen, von denen im Fehlerfall zumindest zwei Bremskreise betätigbar sind,
- Fig. 2: ein Bremssystem für ein Kraftfahrzeug mit insgesamt acht unabhängigen Bremskreisen, von denen im Fehlerfall zumindest vier Bremskreise betätigbar sind.

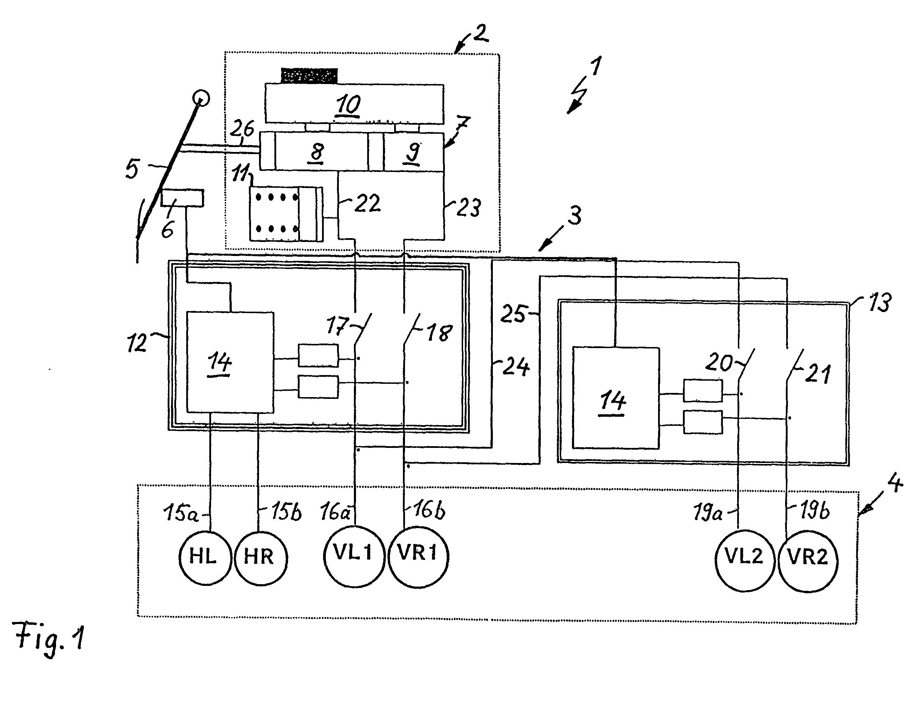

Das in Fig. 1 dargestellte Bremssystem für ein Kraftfahrzeug besteht aus einer Betätigungseinheit 2, einer Hydraulikeinheit 3 sowie einer Radbremse 4, wobei die Einheiten 2 und 3 sowie die Bremse 4 untereinander kommunizieren. Die Betätigungseinheit 2 umfasst ein Bremspedal 5, einen den Pedalweg des Bremspedals 5 aufnehmenden Pedalwegsensor 6, einen vom Bremspedal 5 beaufschlagten Hydraulikzylinder 7, der aus einem hydraulischen Primärkreis 8 und einen hydraulischen Sekundärkreis 9 besteht, einen Bremsflüssigkeitsbehälter 10, der mit den Kreisen 8 und 9 des Hydraulikzylinders 7 in Verbindung steht sowie einen Pedalwegsimulator 11, der hydraulisch mit dem Primärkreis 8 verbunden ist.

Die Hydraulikeinheit 3 besteht aus zwei Hydraulikeinrichtungen 12, 13, die in ihrer Grundstruktur gleich aufgebaut sind. Die erste Hydraulikeinrichtung 12 weist einen Druckmodulator 14 auf, der im Ausführungsbeispiel eine elektrische Motor/Pumpen-Einheit umfasst und der von Stellsignalen des Pedalwegsensors 6 gesteuert wird und insgesamt vier Bremskreise 15a, b, 16a, b mit Bremsdruck versorgt. Jeder Bremskreis umfasst jeweils eine Druckleitung, über die das Bremsfluid der Bremseinrichtung eines Rades zuführbar ist. Die beiden Bremskreise 15a und 15b versorgen Radbremseinrichtungen HL und HR an den Rädern der Fahrzeug-Hinterachse mit der Bremsdruck, der beiden Bremskreise 16a und 16b versorgen Radbremseinrichtungen VL1 und VR1 an den Rädern der Fahrzeug-Vorderachse mit der Bremsdruck. In den Druckleitungen der beiden Bremskreise 16a, b sind über elektrische Stellglieder betätigbare Ventile 17, 18 angeordnet, über die die Bremskreise 16a, b alternativ entweder mit dem Druckmodulator 14 oder mit Druckleitungen 22, 23 verbunden werden können, über die Bremsdruck aus dem Primärkreis 8 bzw. Sekundärkreis 9 des Hydraulikzylinders 7 unmittelbar auf die beiden Radbremseinrichtungen VL1, VR1 übertragbar ist. Die Ventile 17, 18 sind zweckmäßig in der Weise ausgebildet, dass im stromlosen Zustand eine durchgehende Verbindung zum Hydraulikzylinder 7 hergestellt ist, so dass im stromlosen Zustand ausschließlich durch mechanische Betätigung des Bremspedals 5 ein Bremsdruck auf die beiden Bremskreise 16a, b übertragbar ist, welche die Radbremseinrichtungen an den Rädern der Vorderachse beaufschlagen. Im bestromten Zustand sind die Ventile 17, 18 dagegen in der Weise geschaltet, dass der im Druckmodulator 14 erzeugte Bremsdruck auf die Bremskreise 16a, b übertragen wird und die Druckverbindung zum Hydraulikzylinder 7 unterbrochen ist.

Die zweite Hydraulikeinrichtung 13 der Hydraulikeinheit 3 ist vergleichbar aufgebaut wie die erste Hydraulikeinrichtung 12. Auch in der zweiten Hydraulikeinrichtung 13 ist ein Druckmodulator 14 vorgesehen, der zwei weitere Bremskreise 19a, 19b mit Bremsdruck beaufschlagt, wobei die Bremskreise 19a, b Radbremseinrichtungen VL2, VR2 an den Rädern der Vorderachse versorgen, die jedoch unabhängig von den Radbremseinrichtungen VL1, VR1 der Bremskreise 16a, b ausgebildet sind, welche von der ersten Hydraulikeinrichtung 12 mit Bremsdruck beaufschlagt werden. Auch in den Bremskreisen 19a, b der zweiten Hydraulikeinrichtung 13 sind elektrisch betätigbare Ventile 20, 21 vorgesehen, über die die Bremskreise 19a, b alternativ entweder mit dem Druckmodulator 14 oder über Druckleitungen 24, 25 mit den beiden Bremskreisen 16a, b der ersten Hydraulikeinrichtung 12 zu verbinden sind, wobei die Ventile 20, 21 im stromlosen Zustand eine Verbindung mit den ersten beiden Bremskreisen 16a, b herstellen, im bestromten Zustand dagegen die Verbindung zu den Bremskreisen 16a, b durchtrennen und eine Verbindung mit dem Druckmodulator 14 herstellen.

Das Bremssystem 1 funktioniert wie folgt: Bei einer Betätigung des Bremspedals 5 durch den Fahrer wird im Regelfall bei funktionierendem Bremssystem die Pedalbewegung vom Pedalwegsensor 6 gemessen und als Signal dem Druckmodulator 14 sowohl der ersten Hydraulikeinrichtung 12 als auch der zweiten Hydraulikeinrichtung 13 der Hydraulikeinheit 3 zugeführt. Im Druckmodulator 14 der beiden Hydraulikeinrichtungen 12, 13 wird gemäß dem übertragenen Signalwert durch Betätigung der elektrischen Motor/Pumpen-Einheit des Druckmodulators 14 ein dem Pedalweg zugeordneter Bremsdruck erzeugt, der in die zugeordneten Bremskreise 15a, b, 16a, b und 19a, b geleitet wird. Die Ventile 17, 18 und 20, 21 in den Bremskreisen 16a, b bzw. 19a, b befinden sich im bestromten Zustand in der in Fig. 1 dargestellten Position, in der die Bremskreise 16a, b, 19a, b unmittelbar mit Bremsdruck der zugeordneten Druckmodulatoren 14 versorgt werden. Der Bremsdruck wird den hydraulisch betätigbaren Radbremseinrichtungen HL, HR (Bremskreise 15a, 15b), VL1, VR2 (Bremskreise 16a, 16b) der ersten Hydraulikeinrichtung 12 sowie den Radbremseinrichtungen VL2, VR2 (Bremskreise 19a, b) der zweiten Hydraulikeinrichtung 13 zugeführt. Entsprechend dem zugeführten Bremsdruck wird in den Radbremseinrichtungen eine Bremskraft zur Verzögerung des Fahrzeuges erzeugt.

Das Bremspedal 5 ist mit einem Stellzylinder 26 gekoppelt, der das Volumen im Primärkreis 8 des Hydraulikzylinders 7 verstellt, wobei sich diese Volumenänderung über einen zwischen Primärkreis 8 und Sekundärkreis 9 befindlichen Kolben auch auf den Sekundärkreis 9 auswirkt. Der Primärkreis 8 kommuniziert über die Druckleitung 22 mit dem Pedalwegsimulator 11, so dass bei einem Niederdrücken des Bremspedals 5 Bremsfluid aus dem Primärkreis 8 des Hydraulikzylinders 7 über die Druckleitung 22 in einen Aufnahmeraum des Pedalwegsimulators 11 strömt. Der Aufnahmeraum des Pedalwegsimulators 11 ist federbeaufschlagt, so dass sich ein elastisches Verhalten des Bremspedales 5 einstellt.

Die beiden Hydraulikeinrichtungen 12, 13 stehen in einem hierarchischen Verhältnis zueinander, welches garantiert, dass im Fehlerfall die Bremskraft soweit wie möglich aufrecht erhalten werden kann. Die erste Bremseinrichtung 12 nimmt hierbei die übergeordnete Rolle einer Master-Hydraulikeinrichtung, die zweite Bremseinrichtung 13 die untergeordnete Rolle einer Slave-Hydraulikeinrichtung ein.

Fällt die zweite Bremseinrichtung 13 aus, kehren die Ventile 20, 21 in den Bremskreisen 19a, b in ihren stromlos geschlossenen Zustand zurück, in welchem die Bremskreise 19a, b über die Druckleitungen 24, 25 mit den beiden Bremskreisen 16a, b verbunden sind, so dass der Bremsdruck der Bremskreise 16a, b auch auf die Bremskreise 19a, b übertragen wird und damit sichergestellt ist, dass die jeweils zwei Radbremseinrichtungen an einem Vorderrad VL1, VL2 bzw. VR1, VR2 mit ausreichendem Bremsdruck beaufschlagt werden.

Fällt die übergeordnete erste Hydraulikeinrichtung 12 aus, so kehren die Ventile 17, 18 der Bremskreise 16a, b in ihren stromlos geschlossenen Zustand zurück, in welchem die Bremskreise 16a, b über die Druckleitungen 22, 23 mit den Kreisen 8, 9 des Hydraulikzylinders 7 kommunizieren, so dass die Bremskreise 16a, b unmittelbar mit dem mechanisch über das Bremspedal 5 erzeugten Bremsdruck beaufschlagt werden. Sofern der Ausfall nicht auch die zweite Hydraulikeinrichtung 13 erfasst hat, befinden sich die Ventile 20, 21 der Bremskreise 19a, b weiterhin in der gezeigten offenen Stellung, in der eine Verbindung zwischen dem Druckmodulator 14 der zweiten Hydraulikeinrichtung 13 und den beiden Bremskreise 19a, b besteht. Sofern also nur die erste Hydraulikeinrichtung 12 ausfällt, werden die Vorderachs-Bremskreise dieser Hydraulikeinrichtung mechanisch über das Bremspedal 5 mit Bremsdruck versorgt, die zweite Hydraulikeinrichtung 13 wird dagegen nach wie vor über den Druckmodulator 14 mit Bremsdruck beaufschlagt.

Sofern beide Hydraulikeinrichtungen 12, 13 der Hydraulikeinheit 3 ausfallen, befinden sich sämtliche Ventile 17, 18 der ersten Hydraulikeinheit 12 sowie die Ventile 20, 21 der zweiten Hydraulikeinheit 13 im stromlos geschlossenen Zustand. In diesem Fall stehen die Bremskreise 19a, b der zweiten Hydraulikeinrichtung 13 mit den Bremskreisen 16a, b der ersten Hydraulikeinrichtung 12 in Verbindung und kommunizieren über die Bremskreise 16a, b mit dem Hydraulikzylinder 7, so dass auch die Bremskreise 19a, b der zweiten Hydraulikeinrichtung 13 über die Druckleitungen 24, 25 in gleicher Weise wie die Bremskreise 16a, b der ersten Hydraulikeinrichtung 12 mechanisch über das Bremspedal 5 mit Bremsdruck versorgt werden.

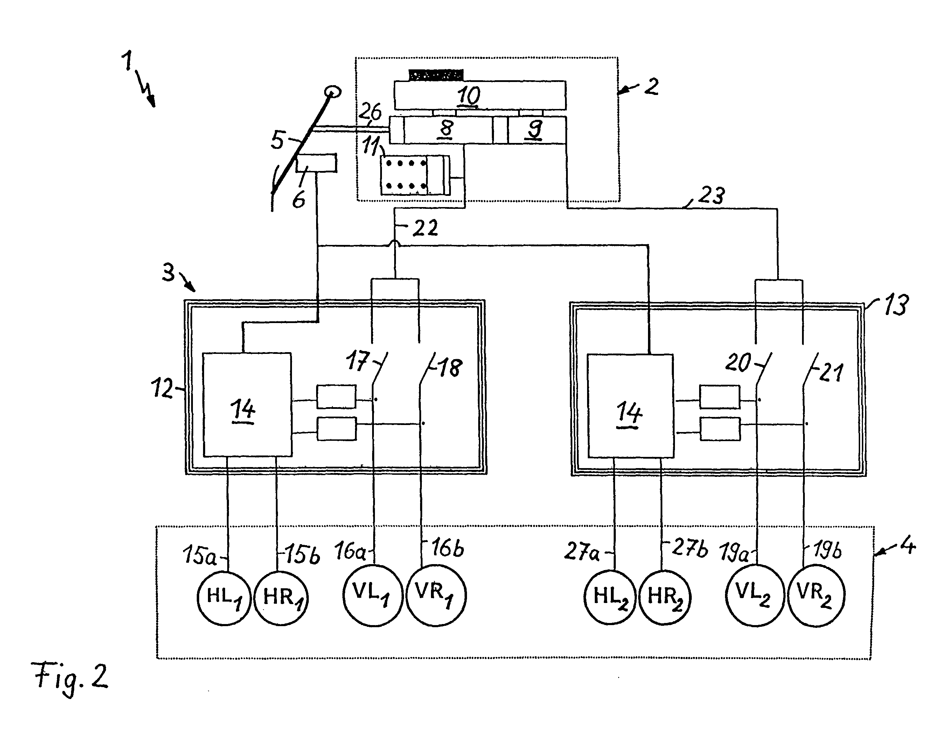

In dem in Fig. 2 dargestellten Bremssystem 1 sind gleiche Bauteile mit gleichen Bezugszeichen wie im Ausführungsbeispiel nach Fig. 1 versehen. Auch das Bremssystem der Fig. 2 weist eine Hydraulikeinheit 3 mit zwei Hydraulikeinrichtungen 12, 13 auf, wobei jedoch im Unterschied zum Ausführungsbeispiel nach Fig. 1 die zweite Hydraulikeinrichtung 13 sowohl zwei Vorderachs-Bremskreise 19a, 19b als auch zwei Hinterachs-Bremskreise 27a, b über den zugeordneten Druckmodulator 14 mit Bremsdruck beaufschlagt. Die Vorderachs-Bremskreise 19a, b versorgen die Radbremseinrichtungen VL2, VR2 an den Rädern der Vorderachse mit Bremsdruck, der Hinterachs-Bremskreis 27 versorgen zusätzliche Radbremseinrichtungen HL2, HR2 an den Rädern der Hinterachse mit Bremsdruck. Insgesamt sind bei dem Bremssystem 1 gemäß Fig. 2 acht Bremskreise 15a, b, 16a, b, 19a, b, 27a, b vorgesehen, wobei an jedem Rad des Fahrzeugs jeweils zwei Radbremseinrichtungen VL1 und VL2, VR1 und VR2, HL1 und HL2 sowie HR1 und HR2 wirken.

Die erste Hydraulikeinrichtung 12 und die zweite Hydraulikeinrichtung 13 stehen in einem gleichrangigen Verhältnis, die Einrichtungen sind in gleicher Weise aufgebaut und arbeiten vollständig unabhängig voneinander. Die Vorderachs-Bremskreise 16a, b der ersten Hydraulikeinrichtung 12 werden im Fehlerfall bei stromlos geschlossenen Ventilen 17, 18 über die Druckleitung 22 mit mechanisch über das Bremspedal 5 erzeugtem Bremsdruck aus dem Primärkreis 8 versorgt, wohingegen die Vorderachs-Bremskreise 19a, b der zweiten Hydraulikeinrichtung 13 im Fehlerfall bei stromlos geschlossenen Ventilen 20, 21 über die Druckleitung 23 von dem im Sekundärkreis 9 mechanisch über das Bremspedal 5 erzeugten Bremsdruck versorgt werden. Bei einem Ausfall einer Hydraulikeinrichtung bleibt die Funktionsfähigkeit der zweiten Hydraulikeinrichtung bestehen.

## Patentansprüche

1. Bremssystem mit elektro-hydraulischer Bremskraftverstärkung für ein Fahrzeug, mit einer Hydraulikeinrichtung (12) zur Erzeugung von Bremsdruck, der einem hydraulischen Bremskreis (16a, b) einer Radbremseinrichtung (VL1, VR1) zuführbar ist, wobei die Hydraulikeinrichtung (12) eine elektrisch betätigbare Motor/Pumpen-Einheit umfasst, welche in Abhängigkeit von Signalen eines Sensors (6) zur Erfassung einer Bremspedalbetätigung steuerbar ist,
**dadurch gekennzeichnet,**
**dass** eine zweite Hydraulikeinrichtung (13) mit einer von den Sensorsignalen steuerbaren zweiten Motor/Pumpen-Einheit zur Erzeugung von Bremsdruck für einen weiteren hydraulischen Bremskreis (19a, b) einer zweiten Radbremseinrichtung (VL2, VR2) vorgesehen ist, wobei beide Radbremseinrichtungen (VL1, VL2; VR1, VR2) gemeinsam auf ein Rad des Fahrzeugs wirken.

2. Bremssystem nach Anspruch 1,
**dadurch gekennzeichnet,**
**dass** der Bremskreis (19a, b) der zweiten Hydraulikeinrichtung (13) mit dem Bremskreis (16a, b) der ersten Hydraulikeinrichtung (12) über schaltbare Ventile (20, 21) verbindbar ist.'

3. Bremssystem nach Anspruch 2,
**dadurch gekennzeichnet,**
**dass** bei einem Ausfall der zweiten Hydraulikeinrichtung (13) die Ventile (20, 21) in der Weise geschaltet werden, dass die Bremskreise (16a, b, 19a, b) beider Hydraulikeinrichtungen (12, 13) miteinander kommunizieren.

4. Bremssystem nach einem der Ansprüche 1 bis 3,
**dadurch gekennzeichnet,**
**dass** eine vom Bremspedal (5) mechanisch beaufschlagbare Betätigungseinheit (2) mit einem Hydraulikzylinder (7) vorgesehen ist und dass zumindest ein Bremskreis (16a, b, 19a, b) einer Hydraulikeinrichtung (12, 13) mit dem Hydraulikzylinder (7) der Betätigungseinheit (2) über schaltbare Ventile (17, 18, 20, 21) verbindbar ist.

5. Bremssystem nach Anspruch 4,
**dadurch gekennzeichnet,**
**dass** beide Hydraulikeinrichtungen (12, 13) über schaltbare Ventile (17, 18, 20, 21) mit dem Hydraulikzylinder (7) verbindbar sind.

6. Bremssystem nach einem der Ansprüche 2 bis 5,
**dadurch gekennzeichnet,**
**dass** die Ventile (17, 18, 20, 21) im stromlosen Zustand in der Weise geschaltet sind, dass der betreffende Bremskreis (16a, b, 19a, b) mit dem Hydraulikzylinder (7) verbunden ist.

7. Bremssystem nach einem der Ansprüche 1 bis 6,
**dadurch gekennzeichnet,**
**dass** zumindest eine Hydraulikeinrichtung (12, 13) zumindest zwei Bremskreise (15a, b, 16a, b, 19a, b, 27a, b) mit Bremsdruck beaufschlagt.

## Claims

1. Brake system with an electric-hydraulic brake booster system for a motor vehicle, having a hydraulic system (12) for generating braking pressure, which can be applied to a hydraulic brake circuit (16a, b) of a wheel brake system (VL1, VR1), the hydraulic system (12) having an electrically actuatable motor/pump unit which can be controlled on the basis of signals of a sensor (6) for detecting brake pedal operation,
**characterised in that**
a second hydraulic system (13) with a second motor/pump unit controllable on the basis of the sensor signals is provided in order to generate braking pressure for another hydraulic brake circuit (19a, b) of a second wheel brake system (VL2, VR2), both wheel brake systems (VL1, VL2; VR1, VR2) jointly acting on a wheel of the vehicle.

2. Brake system as claimed in claim 1,
**characterised in that**
the brake circuit (19a, b) of the second hydraulic system (13) can be connected to the brake circuit (16a, b) of the first hydraulic system (12) via switchable valves (20, 21).

3. Brake system as claimed in claim 2,
**characterised in that**
if the second hydraulic system (13) fails, the valves (20, 21) are switched so that the brake circuits (16a, b, 19a, b) of the two hydraulic systems (12, 13) communicate with one another.

4. Brake system as claimed in one of claims 1 to 3,
**characterised in that**
an operating unit (2) with a hydraulic cylinder (7) which can be mechanically pressurised by the brake pedal (5) is provided and at least one brake circuit (16a, b, 19a, b) of one hydraulic system (12, 13) can be connected to the hydraulic cylinder (7) of the operating unit (2) via switchable valves (17, 18, 20, 21).

5. Brake system as claimed in claim 4,
**characterised in that**
both hydraulic systems (12, 13) can be connected via switchable valves (17, 18, 20, 21) to the hydraulic cylinder (7).

6. Brake system as claimed in one of claims 2 to 5,
**characterised in that**
in the no-flow state, the valves (17, 18, 20, 21) are switched so that the relevant brake circuit (16a, b, 19a, b) is connected to the hydraulic cylinder (7).

7. Brake system as claimed in one of claims 1 to 6,
**characterised in that**
at least one hydraulic system (12, 13) applies braking pressure to at least two brake circuits (15a, b, 16a, b, 19a, b, 27a, b).

## Revendications

1. Système de freinage pour véhicule, avec amplification électro-hydraulique de la force de freinage, avec un dispositif hydraulique (12) pour générer la pression de freinage, qui peut être amenée à un circuit de freinage hydraulique (16a, b) d'un dispositif de freinage de roue (VL1, VR1), le dispositif hydraulique (12) comprenant un ensemble moteur/pompe actionnable électriquement, qui peut être commandé en fonction de signaux émis par un capteur (6) détectant un actionnement de pédale de frein, **caractérisé en ce qu'**un deuxième dispositif hydraulique (13) est prévu, avec un deuxième ensemble moteur/pompe pouvant être commandé par les signaux du capteur, pour générer une pression de freinage pour un autre circuit de freinage hydraulique (19a, b) d'une deuxième dispositif de freinage de roue (VL2, VR2), les deux dispositifs de freinage de roue (VL1, VL1; VR1, VR2) agissant conjointement sur une roue du véhicule.

2. Système de freinage selon la revendication 1, **caractérisé en ce que** le circuit de freinage (19a, b) du deuxième dispositif hydraulique (13) est susceptible d'être relié au circuit de freinage (16a, b) du premier dispositif hydraulique (12), par des vannes (20, 21) pouvant être commutées.

3. Système de freinage selon la revendication 2, **caractérisé en ce que**, en cas de défaillance du deuxième dispositif hydraulique (13), les vannes (20, 21) sont commutées de manière que les circuits de freinage (16a, b, 19a, b) des deux dispositifs hydrauliques (12, 13) communiquent ensemble.

4. Système de freinage selon l'une des revendications 1 à 3, **caractérisé en ce qu'**une unité d'actionnement (2), susceptible d'être sollicitée mécaniquement par la pédale de frein (5) et comprenant un cylindre hydraulique (7), est prévue, et **en ce qu'**au moins un circuit de freinage (16a, b, 19a, b) d'un dispositif hydraulique (12, 13) est susceptible d'être relié au cylindre hydraulique (7) de l'unité d'actionnement (2), par l'intermédiaire de vannes (17, 18, 20, 21) pouvant être commutées.

5. Système de freinage selon la revendication 4, **caractérisé en ce que** les dispositifs hydrauliques (12, 13) sont susceptibles d'être reliés au cylindre hydraulique (7) par l'intermédiaire de vannes (17, 18, 20, 21) pouvant être commutées.

6. Système de freinage selon l'une des revendications 2 à 5, **caractérisé en ce que** les vannes (17, 18, 20, 21), lorsqu'elles sont à l'état non alimenté électriquement, sont commutées de manière que le circuit de freinage (16a, b, 19a, b) concerné soit relié au cylindre hydraulique (7).

7. Système de freinage selon l'une des revendications 1 à 6, **caractérisé en ce qu'**au moins un dispositif hydraulique (12, 13) sollicite au moins deux circuits de freinage (15a, b, 16a, b, 19a, b, 27a, b) par une pression de freinage.
